# EUROPEAN PATENT SPECIFICATION

(11) **EP 2 178 692 B1**
(45) Date of publication and mention of the grant of the patent: **19.03.2014**
(21) Application number: 08788391.4
(22) Date of filing: 20.08.2008
(51) Int. Cl.: B29C 65/02, A62B 17/04, C08F 8/20, C08J 5/12, C08J 7/12, B29C 65/04, B29C 65/38, B29K 21/00, C08L 21/00

(54) **A process for making a garment comprising a polyurethane component and a natural rubber seal**
Verfahren zum Herstellen eines Kleidungsstücks enthaltend ein Bestandteil aus Polyurethan und eine Dichtung aus Naturkautschuk
Procédé pour fabriquer un vêtement comprenant un composant en polyuréthane et un joint en caoutchouc naturel

(30) Priority: 28.08.2007 GB 0716707
(43) Date of publication of application: 28.04.2010
(73) Proprietor: Avon Polymer Products Limited, Melksham Wiltshire SN12 6NB (GB)
(72) Inventor: HODGSON, Matthew, James, Wiltshire SN8 2PA (GB); SMITH, Philip, Adams, Wiltshire SN12 6TB (GB)
(74) Representative: Haslam, Simon David
(86) International application number: PCT/GB2008/002827
(87) International publication number: WO 2009/027632

(56) References cited:
- WO-A-03/000351
- FR-A- 2 257 423
- GB-A- 2 355 216
- JP-A- 56 024 146
- JP-A- 61 254 630
- US-A- 4 500 685

## Description

The present invention relates to a process for the manufacture of garments comprising natural rubber and polyurethane components.

Rubber has a long history of use in manufactured goods. For example, rubber seals are widely used in clothing and protective garments where it is desired to form a seal between the body of a person wearing the garment and the garment itself. One type of garment which typically includes rubber seals is the dry suit. Dry suits are typically made from panels of polymer impregnated fabric which are sewn together to form the bulk of the garment. However, the polymer impregnated fabric lacks the necessary elasticity and resilience to form a good seal against the wearer's neck, wrists and ankles and in those places in the dry suit typically includes a rubber seal for that purpose. A further instance is the type of protective hood used by emergency service personnel to protect themselves in the event of chemical, biological, radiological or nuclear event. Such hoods are known as CBRN hoods and conventionally comprise a transparent thermoplastic polyurethane hood portion which covers the head and includes a respirator filter to which the user can breathe. The hood portion is sealed around the wearer's neck with a rubber seal.

The joins between the rubber seals and the thermoplastic polyurethane components should be both strong and free of leaks. Conventional methods of joining rubber seals to polyurethane include using an adhesive such as double-sided adhesive tape, together with stitching for reinforcement. Such methods are labour intensive and inconvenient. For example, a known method of manufacturing a protective CBRN hood involves joining the rubber neck seal to the transparent polyurethane hood using double-sided adhesive tape which requires careful positioning of the seal and hood and a lengthy stepwise procedure bringing the components together with the double-sided tape.

Attempts have been made to provide simpler and more robust methods of joining rubber seals to thermoplastic polymers such as polyurethane. GB 2 355 216A discloses a process in which a rubber neck or cuff seal for a dry suit comprising a dipped rubber layer is coated with a thermoplastic layer such as a polyurethane. The coated seal may then be welded to the rest of the garment by a welding process which involves fusing the polyurethane polymer of the surface coating of the seal.

US4500685 discloses a method of bonding two rubber sheets together by treating each sheet with a halogen-releasing halogenoid, placing a polyurethane film between the treated rubber sheets, and then pressing the resulting "sandwich" with an iron.

There remains a need for improved processes of joining rubber and a thermoplastic such as polyurethane together.

The present invention provides a process of making a garment comprising a polyurethane component and a natural rubber seal, in which the natural rubber seal has a halogenated surface and the process comprises the steps of bringing the polyurethane component into contact with the halogenated surface of the natural rubber seal and RF welding or impulse welding the polyurethane component to the halogenated surface of the rubber seal.

It has previously been believed that it is not possible to join a rubber directly to a thermoplastic such as polyurethane in a satisfactory manner using welding. Surprisingly, the present inventor has found that it is possible to achieve a strong and leak-free join between rubber and thermoplastic components by welding provided that the surface of the rubber component in the region of the weld has previously been halogenated. The inventor believes that the halogenated surface of the rubber has a degree of thermoplasticity which allow it to be welded to a thermoplastic polymer such as polyurethane.

In the process of the invention, the thermoplastic polyurethane component is welded directed to the halogenated surface of the rubber seal, that is, there are no intervening layers or materials between the thermoplastic polyurethane and the halogenated surface. The thermoplastic polyurethane and halogenated rubber therefore fuse together during the welding step, in contrast to the process of GB 2 355 216A in which the body of the garment is welded to the polyurethane coating of the rubber seal.

The rubber seal may be of any natural rubber which is capable of being halogenated to provide a halogenated surface. Preferably, the rubber seal is of isoprene rubber. Isoprene rubber components are usually produced in one of two ways. In the first way, a pre-cured latex is spread onto a horizontal belt, cured using heat, passed through a trough of talc to reduce surface tackiness and is then collected onto rolls. The sheet material is then halogenated, if desired, and cut to the desired shape. In the second method, an aluminium sheet is coated with a coagulant and then dipped into a bath of natural rubber latex. The sheet is lifted and the latex remaining on the sheet coagulates to form a rubber sheet. That rubber sheet is then halogenated, if desired, and cut to the desired shape. The rubber component may be made by either of those methods or by any other suitable method.

High levels of contaminants such as talc or silicone oil on the surfaces of rubber component, if present, may interfere with the welding process or otherwise reduce the strength of the weld and where excessive levels of talc or silicone are present, the process of the invention may include the step of removing at least some of the talc or silicone prior to the welding step. The talc or silicone can be removed by conventional washing and cleaning processes.

The halogenation of natural rubber components such as natural rubber seals is well known and is typically carried out in order to reduce the surface tackiness of the rubber so that it slips easily over the skin and to reduce the amount of extractable protein present, thereby lowering the risk of an allergic reaction in the wearer. The halogenation typically involves treating the rubber component with a solution of the appropriate halogen. Those conventional methods have been found to produce a satisfactory halogenated surface for use in the process of the invention although any suitable halogenation technique may be used. Preferably, the rubber component is chlorinated. (References herein to halogenation, chlorination, or bromination should be taken to refer to the above-mentioned surface treatment and not to refer to any halogen present as a constituent of the rubber polymer repeat unit, such as the bromine in bromo butyl rubber and the chlorine in chlorobutyl rubber.)

For the process of the invention to work it is not necessary for the whole surface of the rubber seal to be halogenated; it is sufficient that only the region to be welded is halogenated. Accordingly, the surface of the rubber seal may include one or more regions which are not halogenated. Preferably, substantially all of the rubber seal is halogenated (although any cut edges of the rubber seal formed by cutting or stamping the component from a sheet of rubber will typically not be halogenated).

The level of halogenation may vary within a wide range. The halogenation level of the surface of the rubber seal may, for example, be within the range of from 0.1 to 20%, optionally from 0.1 to 10%, preferably from 0.5 to 3.5%, and more preferably in the range of from 1 to 3%. The halogenation level can be determined using fluorescence spectroscopy, for example, using an x-ray fluorescence analyser of the type available from ASOMA Instruments of Austin, Texas which is now part of the SPECTRO group. The ASOMA analyser shines x-rays of 5.9keV onto the sample and chlorine atoms, if present, emit x-rays at 2.62keV. Those x-rays are detected and the rate of emission of the x-rays is compared with a calibration curve prepared using samples of known chlorine content to give the chlorine content of the sample.

Where the rubber seal is made from a rubber sheet material the thickness of the rubber sheet material is preferably within the range of from 100 microns to 2.0 millimetres. The seal may be, for example, a seal for use in an opening of a garment to seal the garment to the wearer's body, for example, a neck, wrist or ankle seal.

Optionally, the polyurethane of the polyurethane component has a melting point in the range of from 130°C to 220°C. The polyurethane should be able to withstand the elevated temperatures involved in the welding step without significant decomposition. The polyurethane of the polyurethane component may contain one or more plasticisers to modify the softening point of the polyurethane material. The polyurethane component may also comprise one or more other materials such as fillers, pigments, antioxidants and the like. The important point is that the polyurethane should be able to melt during the welding step and become welded to the halogenated surface of the halogenated rubber seal.

The polyurethane may be a semi-crystalline polyurethane. In a preferred embodiment, the polyurethane component is an semi-crystalline polyurethane sheet material suitable for fabrication of a protective CBRN hood. The polyurethane sheet material may be of any suitable thickness. Optionally, the thickness of the polyurethane sheet material is in the range of 100 microns to 1000 microns. Below 100 microns thickness the chemical barrier properties of polyurethane may decline and above 1000 microns flexibility and wearability may reduce. Advantageously, the polyurethane sheet is transparent, that is, is optionally clear. Polyurethane has the further advantage that it is typically very resistant to chemical attack and is therefore suitable for use in protective garments such as protective hoods.

The polyurethane component may be of a crystalline polyurethane. Crystalline polyurethanes are used, for example in the filter housings of protective hoods.

Preferably, the polyurethane does not contain a plasticiser. The skilled reader will understand that the polyurethane component may comprise one or more elements of non-thermoplastic material, for example metal studs, stitching and the like, which do not take part in the welding. For example, the polyurethane component could be of a laminate material having a polyurethane layer, which is involved in the welding step, adhered to a non-thermoplastic substrate. In a similar way, the rubber seal may also comprise non-rubber elements which take no part in the welding step. Preferably, however, the polyurethane component is free of non-thermoplastic elements and the rubber seal is free of non-rubber elements.

The welding process preferably involves pressing the polyurethane component against the halogenated surface of the rubber seal and then welding the two components together in the area of contact.

Impulse welding is a well-known method of welding which typically involves welding two thermoplastic components by clamping them together in close contact with a shielded heating element. Impulse welding has the advantage that it is suitable for use with thermoplastics of both high and low polarity and can therefore weld well thermoplastics which are less suitable for RF welding by virtue of having relatively low polarity, such as polyester polyurethanes. The equipment required for impulse welding may also be significantly less costly than that required for RF welding.

The optimum conditions employed in the impulse welding will in general depend on a number of factors and it is within the ability of the skilled person to adjust the welding conditions accordingly. The present inventor has found, for example, that where the thermoplastic component is a polyurethane film having a thickness in the range of from 100 to 300 microns, and the rubber component is an isoprene film having a thickness in the range of from 0.4 to 0.6mm and is chlorinated to a level of 2%, an impulse weld time of around six seconds, a weld temperature of around 165°C and a weld pressure of around 0.1N/mm² or more has produced welds of excellent strength.

In another preferred embodiment, the welding is RF welding (Radio Frequency welding). RF welding is a form of induction welding which is particularly suited to the welding of polymeric materials. The skilled person will be aware that the particular RF welding conditions required for a particular seal will depend on a number of factors including the chemical nature of the materials to be joined and the shape and size of the desired weld. The optimum conditions will in general involve a balance of the pressure applied along the weld line, the weld power and the time over which the weld power is applied. Preferably, the RF weld power is at least 1.0kW. Preferably the weld time is at least 1.0 seconds. Optionally, the weld frequency will be in the region of 27.120 megahertz. For a process in which a natural rubber neck seal having a thickness of 500 microns is welded to a hood portion of a transparent flexible polyurethane sheet material of a thickness of 250 microns and in which the rubber has a chlorination level of 2%, the present inventor has found that an RF weld power of 2.2kW, a weld time of 5.5 seconds and a weld pressure of 0.6 Newtons per mm² at a weld frequency of 27.120 megahertz has produced welds which generally are free of leaks and of excellent strength.

The weld may be a 2D weld (i.e. the weld is one plane) or a 3D weld.

In a particular preferred embodiment the garment is a protective hood for emergency use such as a CBRN hood, the rubber seal is a rubber neck seal and the polyurethane component is a transparent polyurethane hood which is to be welded to the neck seal. In a further preferred embodiment, the rubber seal is of a rubber mask, such as a gas mask, and the polyurethane component is a transparent polyurethane visor, which is to be welded to the rubber mask. Alternatively, the garment may be a dry suit. In that case the rubber seal will typically be a neck, wrist or ankle seal and the polyurethane component will be the body of the dry suit which is typically made of polyurethane coated fabric.

Embodiments of the process of the invention will be explained below for the purpose of illustration only, with reference to drawings in which:
- Figure 1: shows a simplified exploded perspective view of a welding assembly for use in the process of the invention;
- Figure 2: shows a cross section through a part of the welding assembly of Figure 1;
- Figure 3: shows a cross section similar to that shown in Figure 2 but immediately following the welding step;
- Figure 4: shows the detail of part of the welded assembly; and
- Figure 5: shows the positions of six samples taken from the assembly of Figure 4 for use in peel and shear strength testing.

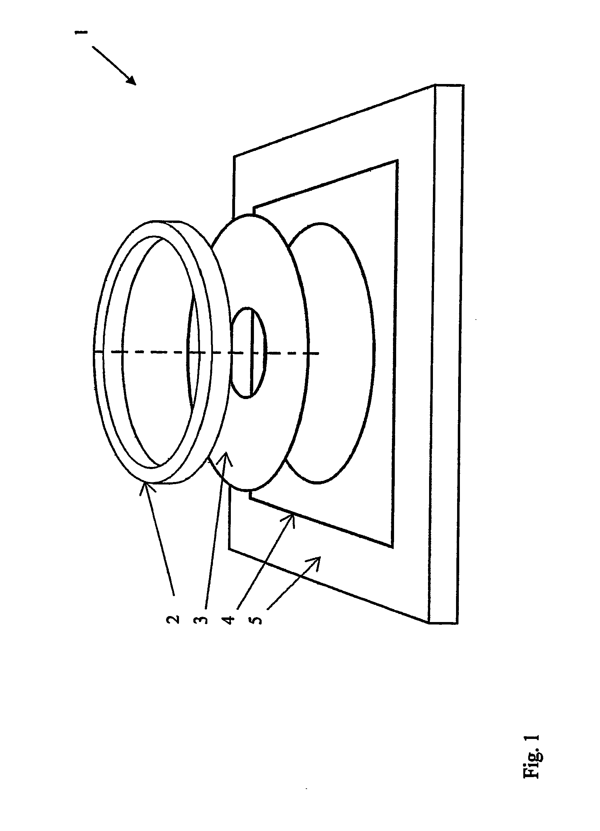

Figure 1 shows a simplified exploded view of assembly 1 of components arranged to be RF welded according to one embodiment of the process of the invention. The assembly 1 comprises a weld ring 2, a circular neck seal 3 consisting of 0.5mm synthetic isoprene chlorinated to 2%, a polyurethane component 4 consisting of a section of 0.274mm thick TUFTANE TFL-1E polyurethane sheet (obtained from Permali of Gloucester, UK), and a weld platen 5.

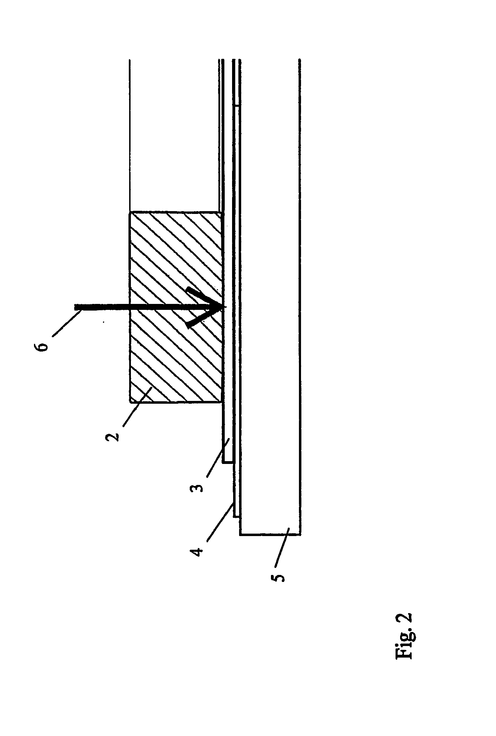

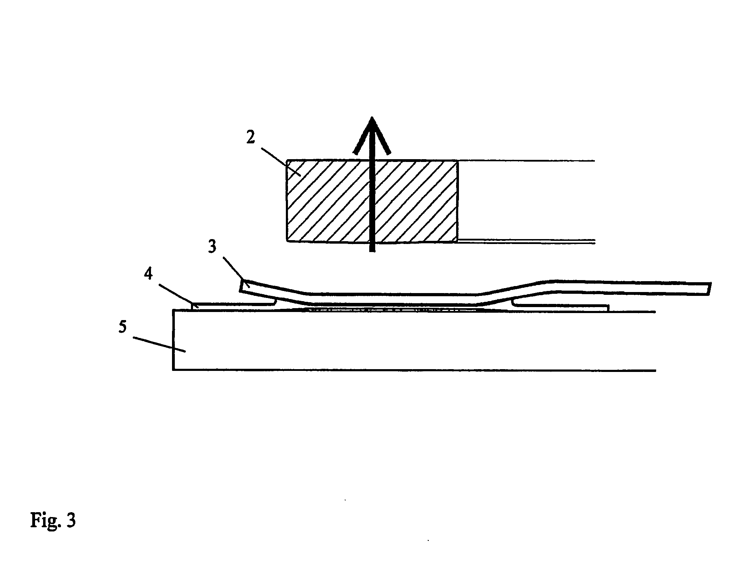

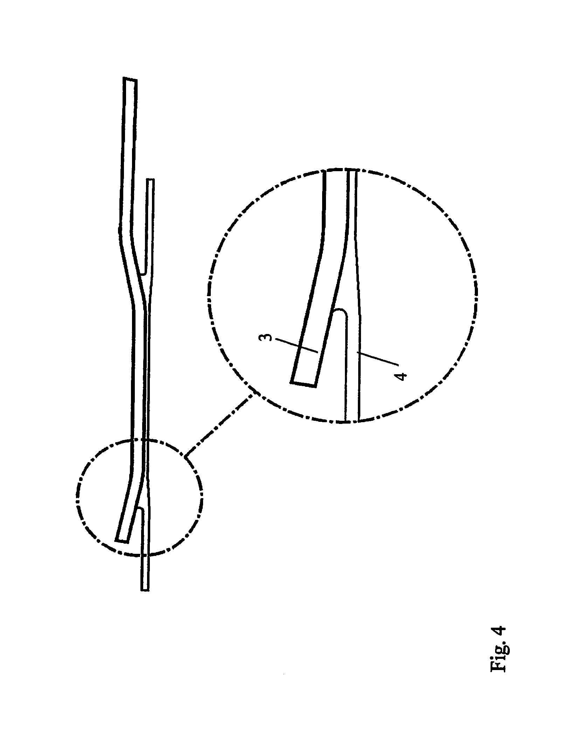

The components were brought together such that the isoprene component 3 and the polyurethane component 4 were clamped between the weld ring 2 and the weld platen 5 as shown in Figure 2. Pressure was applied in the direction of the arrow 6 and the RF welding was commenced. The weld power was 2.75kW and the weld cycle was 0.5 seconds pre-weld, 6.5 seconds of welding time and 1.0 second of dwell time. The weld tool temperature was 51°C and the nominal weld pressure was 6 bar. Following the welding step, the pressure was released and the weld ring 2 was lifted away as shown in Figure 3. Figure 4 shows in detail a section through the welded sample showing that the polyurethane had bonded to the halogenated surface of the rubber component 3.

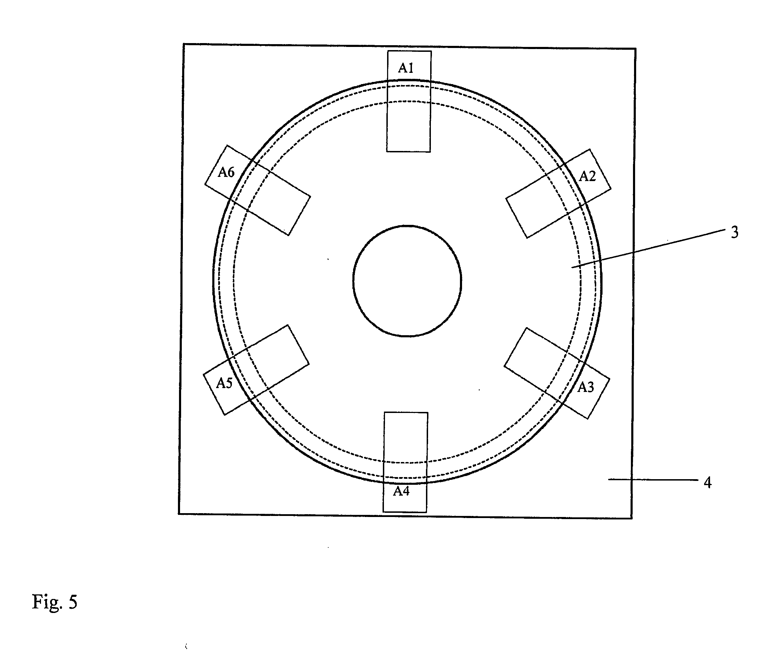

Six rectangular 25 x 70mm samples A1 to A6 were cut from the welded assembly as shown in Figure 5 and were each subjected to shear and peel strength tests. The same tests were carried out on a similar sample prepared according to the method of the invention using impulse welding rather than RF welding. The results, along with results for assemblies fixed with conventional adhesive tape, are shown in the table. Accordingly, it can be seen that in this example the welding process gave the join between the isoprene component and the polyurethane component of significantly higher shear and peel strength than achieved using conventional adhesive tape.

| **Welding Method** | **Mean Shear Strength (N/mm)** | **Mean Peel Strength (N/mm)** |
|---|---|---|
| RF Weld | 1.75 | 0.98 |
| Impulse Weld | 1.97 | 1.59 |
| Typical Tape Joint | 0.78 | 0.54 |

Whilst the present invention has been described and illustrated with reference to a particular embodiment it will be appreciated by those of ordinary skill in the art that the invention lends itself to many different variations not illustrated herein. For that reason, reference should be made to the claims to determine the true scope of the present invention.

## Claims

1. A process of making a garment comprising a polyurethane component (4) and a natural rubber seal (3), in which the natural rubber seal has a halogenated surface and the process comprises the steps of bringing the polyurethane component into contact with the halogenated surface of the natural rubber seal and RF welding or impulse welding the polyurethane component to the halogenated surface of the rubber seal.

2. A process as claimed in claim 1 in which the halogenated surface of the natural rubber seal is halogenated to a level in the range of from 0.1 to 20%.

3. A process as claimed in claim 1 in which the halogenated surface of the natural rubber seal is halogenated to a level in the range of from 0.5 to 3.5%.

4. A process as claimed in any preceding claim in which the halogenated surface of the natural rubber seal is chlorinated.

5. A process as claimed in any preceding claim in which the polyurethane component is a semi-crystalline polyurethane sheet suitable for the fabrication of a CBRN hood.

6. A processing as claimed in claim 5, wherein the thickness of the sheet is in the range of 100 microns to 1000 microns.

7. A process as claimed in any preceding claim in which the garment is a protective hood.

8. A process as claimed in claim 7 in which the polyurethane component is a transparent hood portion of a protective hood, and the rubber seal is a neck seal.

9. A process as claimed in any of claims 1 to 4 in which the rubber seal is a neck, wrist or ankle seal of a dry suit and the polyurethane component is provided by a polyurethane coated fabric of the body of the dry suit.

10. A process as claimed in any preceding claim in which the natural rubber seal is made from a rubber sheet material having a thickness within the range of from 100 microns to 2.0 millimetres.

## Patentansprüche

1. Verfahren zum Herstellen eines Kleidungsstückes, das eine Polyurethankomponente (4) und eine Dichtung aus Naturgummi (3) umfasst, wobei die Dichtung aus Naturgummi eine halogenierte Oberfläche aufweist und das Verfahren die Schritte umfasst, dass die Polyurethankomponente mit der halogenierten Oberfläche der Dichtung aus Naturgummi in Kontakt gebracht wird und die Polyurethankomponente an die halogenierte Oberfläche der Dichtung aus Naturgummi durch RF geschweißt oder impulsgeschweißt wird.

2. Verfahren, wie in Anspruch 1 beansprucht, wobei die halogenierte Oberfläche der Dichtung aus Naturgummi bis zu einem Grad in dem Bereich von 0,1 bis 20% halogeniert ist.

3. Verfahren, wie in Anspruch 1 beansprucht, wobei die halogenierte Oberfläche der Dichtung aus Naturgummi bis zu einem Grad in dem Bereich von 0,5 bis 3,5% halogeniert ist.

4. Verfahren, wie in einem beliebigen der vorhergehenden Ansprüche beansprucht, wobei die halogenierte Oberfläche der Dichtung aus Naturgummi chloriert ist.

5. Verfahren, wie in einem beliebigen der vorhergehenden Ansprüche beansprucht, wobei die Polyurethankomponente eine teilkristalline Polyurethanfolie ist, die für die Herstellung einer CBRN-Haube geeignet ist.

6. Verfahren, wie in Anspruch 5 beansprucht, wobei die Dicke der Folie in dem Bereich von 100 Mikron bis 1000 Mikron ist.

7. Verfahren, wie in einem beliebigen der vorhergehenden Ansprüche beansprucht, wobei das Kleidungsstück eine Schutzhaube ist.

8. Verfahren, wie in Anspruch 7 beansprucht, wobei die Polyurethankomponente ein transparenter Haubenteil einer Schutzhaube ist, und die Gummidichtung eine Halsdichtung ist.

9. Verfahren, wie in einem beliebigen der Ansprüche 1 bis 4 beansprucht, wobei die Gummidichtung eine Hals-, Handgelenk- oder Fußgelenkdichtung eines Trockenanzugs ist und die Polyurethankomponente durch ein polyurethanbeschichtetes Gewebe des Körpers des Trockenanzugs bereitgestellt wird.

10. Verfahren, wie in einem beliebigen der vorhergehenden Ansprüche beansprucht, wobei die Dichtung aus Naturgummi aus einem Gummifolienmaterial hergestellt ist, das eine Dicke im Bereich von 100 Mikron bis 2,0 Millimeter aufweist.

## Revendications

1. Procédé pour fabriquer un vêtement comprenant un composant en polyuréthane (4) et un joint en caoutchouc naturel (3), dans lequel le joint en caoutchouc naturel présente une surface halogénée et le procédé comprend les étapes de mise en contact du composant en polyuréthane avec la surface halogénée du joint en caoutchouc naturel et d'un soudage HF ou d'un soudage par impulsions du composant en polyuréthane à la surface halogénée du joint en caoutchouc.

2. Procédé selon la revendication 1 dans lequel la surface halogénée du joint en caoutchouc naturel est halogénée à un niveau situé dans la plage de 0,1 à 20 %.

3. Procédé selon la revendication 1 dans lequel la surface halogénée du joint en caoutchouc naturel est halogénée à un niveau situé dans la plage de 0,5 à 3,5 %.

4. Procédé selon l'une quelconque des revendications précédentes dans lequel la surface halogénée du joint en caoutchouc naturel est chlorée.

5. Procédé selon l'une quelconque des revendications précédentes dans lequel le composant en polyuréthane est une feuille de polyuréthane semi-cristallin approprié à la fabrication d'une cagoule de protection CBRN.

6. Procédé selon la revendication 5, dans lequel l'épaisseur de la feuille se situe dans la plage de 100 microns à 1 000 microns.

7. Procédé selon l'une quelconque des revendications précédentes dans lequel le vêtement est une cagoule de protection.

8. Procédé selon la revendication 7 dans lequel le composant en polyuréthane constitue la partie transparente d'une cagoule de protection, et le joint en caoutchouc constitue un joint au niveau du cou.

9. Procédé selon l'une quelconque des revendications 1 à 4 dans lequel le joint en caoutchouc constitue un joint au niveau du cou, du poignet ou de la cheville d'une combinaison étanche et le composant en polyuréthane est fourni sous la forme d'un tissu enduit de polyuréthane constituant le corps de la combinaison étanche.

10. Procédé selon l'une quelconque des revendications précédentes dans lequel le joint en caoutchouc naturel est fabriqué à partir d'un matériau en feuilles de caoutchouc ayant une épaisseur située dans la plage de 100 microns à 2,0 millimètres.
